# EUROPEAN PATENT SPECIFICATION

(11) **EP 2 706 711 B1**
(45) Date of publication and mention of the grant of the patent: **05.10.2016**
(21) Application number: 11874419.2
(22) Date of filing: 20.10.2011
(51) Int. Cl.: H04L 12/70, H04L 29/06, H04W 80/06

(54) **METHOD AND DEVICE FOR SENDING AND RECEIVING AN IPV6 DATA PACKET**
VERFAHREN UND VORRICHTUNG ZUM SENDEN UND EMPFANGEN EINES IPV6-DATENPAKETS
PROCÉDÉ ET DISPOSITIF POUR TRANSMETTRE ET RECEVOIR UN PAQUET DE DONNÉES IPV6

(43) Date of publication of application: 12.03.2014
(73) Proprietor: Huawei Technologies Co., Ltd., Longgang District Shenzhen, Guangdong 518129 (CN)
(72) Inventor: JIANG, Sheng, Shenzhen Guangdong 518129 (CN); FU, Yu, Shenzhen Guangdong 518129 (CN)
(74) Representative: Körber, Martin Hans
(86) International application number: PCT/CN2011/081022
(87) International publication number: WO 2013/056447

(56) References cited:
- CA-A1- 2 774 281
- CN-A- 1 744 573
- CN-A- 101 119 219
- US-A1- 2005 272 421
- US-A1- 2010 074 256
- 'Internet Protocol, Version 6 (IPv6) Specification' RFC2460 31 December 1998, pages 2 - 10, XP015008244

## Description

### FIELD OF THE INVENTION

The present invention generally relates to IPv6-based network, and in particular, to a method and an apparatus for sending and receiving IPv6 data packets.

### BACKGROUND OF THE INVENTION

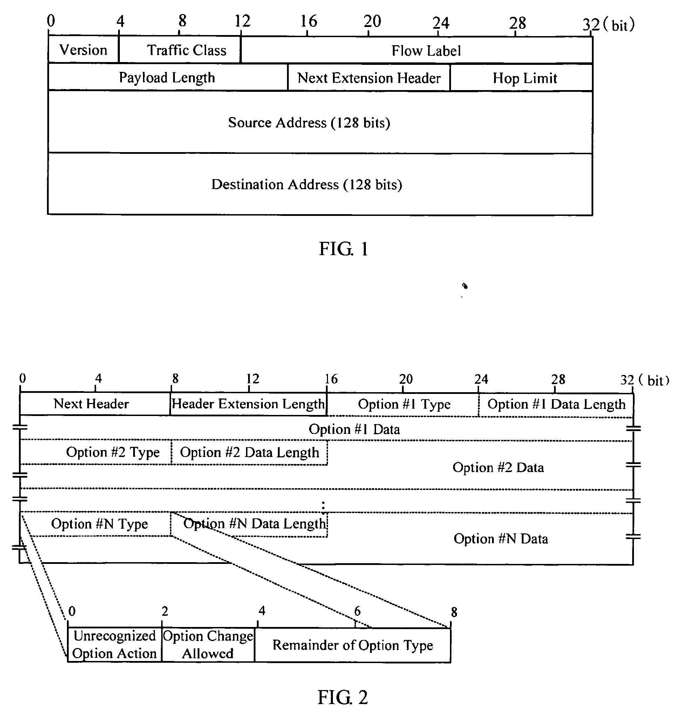

According to existing IPv6 protocols (such as RFC 2460), a Traffic Class field and a Flow Label field may be respectively added in the main header of an IPv6 data packet (as shown in FIG. 1). The Traffic Class field is available for use by an originating node or a forwarding router to identify and distinguish the class or priority of IPv6 packets. For example, a Differentiated Service field may be added in the Traffic Class field to provide quality of service (QoS) guarantee. The Flow Label field may use a flow label to label all data packets in a specific flow to ensure delivery consistency of data packets in the flow. However, the above Traffic Class field and Flow Label field cannot effectively differentiate IPv6 data packets of different services. For example, they cannot differentiate between a video service flow and a data service flow. In addition, other fields in the main header also cannot differentiate the services of IPv6 data packets.

According to existing IPv6 protocols, an extension header may be added to an IPv6 data packet. In existing extension headers, only one extension header which must be examined by all intermediate devices is the hop-by-hop options extension header. The hop-by-hop options extension header may be used to transmit management information to all routers in the transmission path.

FIG. 2 shows a format of the existing hop-by-hop options extension header. As shown in FIG. 2, the hop-by-hop options extension header may include a Next Header field (8 bits), a Header Extension Length field (8 bits), and one or multiple option fields (for example, option #1 and option #2). Every option field may include an Option Type field (8 bits), an Option Data Length field (8 bits), and an Option Data field (with variable length). For example, option #1 may include an Option #1 Type field, an Option #1 Data Length field, and an Option #1 Data field. The first and second bits of the Option Type field are an Unrecognized Option Action indicator, the third bit is an Option Change Allowed flag, and the last five bits are Remainder of Option Type.

In RFC 2711, a Router Alert Option is added in the hop-by-hop options extension header. The Router Alert Option may be used to instruct routers in the transmission path whether to parse the header of the IPv6 data packet, and may be used to notify an intermediate router of the data content in the IPv6 data packet. However, the Router Alert Option includes only Multicast Listener Discovery information and Resource Reservation Protocol (RSVP) information, and cannot provide service information about a service data packet.

US 2010/0074256 A1 provides a service recognition method of a router in IPv6 environment, allowing a router to facilitate access of a mobile terminal to various services by using service ID of a service header and identification information of the mobile terminal included in an IPv6 packet transmitted from the mobile terminal.

US 2005/0272421 A1 provides methods and apparatus for including geographical information of a target node in a geographical response message when requested by a requesting node. The geographical messaging may be included in an IPv6 datagram that supports a data payload and the geographical information in an extension header, and the extension header corresponds to a destination options header or a hop-by-hop header.

CA 2 774 281 A1 provides a user access method, which includes: A terminal device sends, to a residential gateway, an IPv6 access request including user information, and the residential gateway sends the IPv6 access request including the user information and RG device information to an access node, where the user information and the RG device information are carried in a hop-by-hop extension header of the IPv6 access request.

### SUMMARY OF THE INVENTION

Regarding the above problem, the present invention provides a method and an apparatus for sending and receiving IPv6 data packets.

According to one aspect of the present invention, a method for sending IPv6 data packets is provided. The method comprises: obtaining a service data packet from a transfer layer; adding an IPv6 data packet header to the service data packet to form an IPv6 data packet, wherein the IPv6 data packet header carries service information about the service data packet, and wherein the service information comprises an ID of a service provider; and sending the IPv6 data packet.

According to another aspect of the present invention, a method for receiving IPv6 data packets is provided. The method comprises: receiving an IPv6 data packet, wherein the IPv6 data packet is formed by adding an IPv6 data packet header to a service data packet, and the IPv6 data packet header carries service information about the service data packet, and wherein the service information comprises an ID of a service provider; and obtaining the service information about the service data packet from the IPv6 data packet header.

According to another aspect of the present invention, an apparatus for sending IPv6 data packets is provided. The apparatus comprises: a processor configured to obtain a service data packet from a transfer layer and add an IPv6 data packet header to the service data packet to form an IPv6 data packet, wherein the IPv6 data packet header carries service information about the service data packet, and wherein the service information comprises an ID of a service provider; and a transmitter configured to send the IPv6 data packet.

According to another aspect of the present invention, an apparatus for receiving IPv6 data packets is provided. The apparatus comprises: a receiver configured to receive an IPv6 data packet, wherein the IPv6 data packet is formed by adding an IPv6 data packet header to a service data packet, and the IPv6 data packet header carries service information about the service data packet, and wherein the service information comprises an ID of a service provider; and a processor configured to obtain the service information about the service data packet from the IPv6 data packet header.

The present invention can be implemented to carry the service information about a service data packet in an IPv6 data packet and correspondingly obtain the service information about the service data packet from the IPv6 data packet, wherein the service information may be used to perform processing such as classification, statistics collection, or analysis about IPv6 data packets to facilitate network management and monitoring, and facilitate using network resources more reasonably.

### BRIEF DESCRIPTION OF THE DRAWINGS

FIG. 1 is a structural schematic diagram of the main header of an IPv6 data packet;
FIG 2 is a schematic diagram of the format of a hop-by-hop options extension header;
FIG. 3 is a structural schematic diagram of a service information extension header according to an embodiment of the present invention;
FIG. 4 is a structural schematic diagram of a service information option according to an embodiment of the present invention;
FIG 5A to FIG. 5C are schematic diagrams of exemplary service information according to an embodiment of the present invention;
FIG. 6 is a flowchart of a method for sending IPv6 data packets according to an embodiment of the present invention;
FIG. 7 is a flowchart of a method for carrying the service information about a service data packet in a service information extension header according to an embodiment of the present invention;
FIG. 8 is a flowchart of a method for carrying the service information about a service data packet in a service information option of a hop-by-hop options extension header or a destination options extension header according to an embodiment of the present invention;
FIG. 9 is a schematic diagram of an apparatus for sending IPv6 data packets according to an embodiment of the present invention;
FIG. 10 is a schematic diagram of an apparatus for carrying the service information about a service data packet in a service information extension header according to an embodiment of the present invention;
FIG. 11 is a schematic diagram of an apparatus for carrying the service information about a service data packet in a service information option of a hop-by-hop options extension header or a destination options extension header according to an embodiment of the present invention;
FIG. 12 is a flowchart of a method for receiving IPv6 data packets according to an embodiment of the present invention;
FIG. 13 is a flowchart of a method for obtaining the service information about a service data packet from a service information extension header according to an embodiment of the present invention;
FIG. 14 is a flowchart of a method for obtaining the service information about a service data packet from a service information option of a hop-by-hop options extension header or a destination options extension header according to an embodiment of the present invention;
FIG. 15 is a schematic diagram of an apparatus for receiving IPv6 data packets according to an embodiment of the present invention;
FIG. 16 is a schematic diagram of an apparatus for obtaining the service information about a service data packet from a service information extension header according to an embodiment of the present invention;
FIG. 17 is a schematic diagram of an apparatus for obtaining the service information about a service data packet from a service information option of a hop-by-hop options extension header or a destination options extension header according to an embodiment of the present invention;
FIG. 18 is a schematic diagram of an apparatus for sending IPv6 data packets according to an embodiment of the present invention; and
FIG. 19 is a schematic diagram of an apparatus for receiving IPv6 data packets according to an embodiment of the present invention.

### DETAILED DESCRIPTION OF THE EMBODIMENTS

The present invention is capable of carrying service information about a service data packet in an IPv6 data packet, and correspondingly obtaining the carried service information about the service data packet from the IPv6 data packet, thereby enabling a network to perform processing such as classification, statistics collection, or analysis about IPv6 data packets according to the service information carried in the IPv6 data packets.

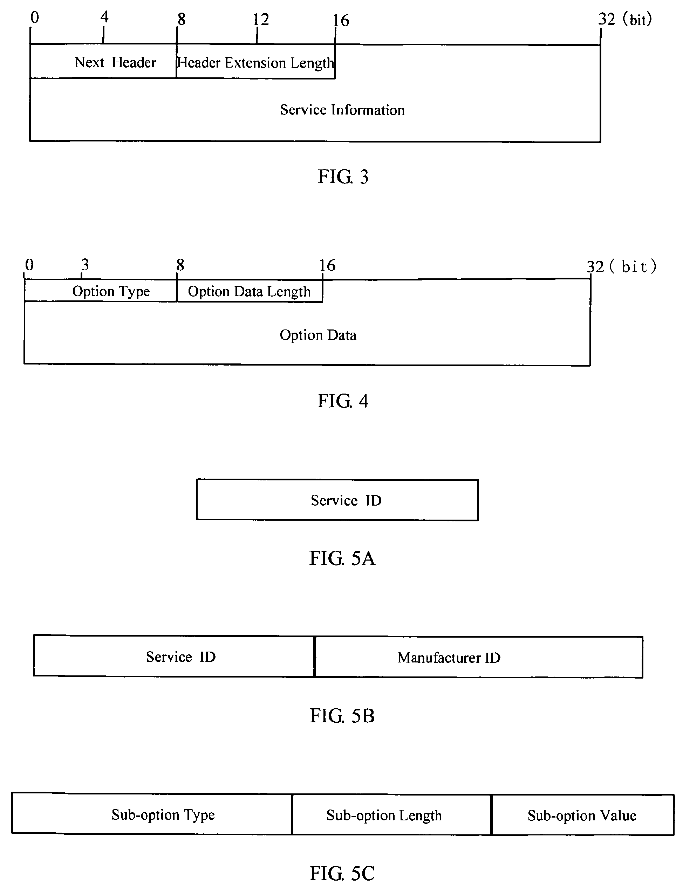

According to an embodiment of the present invention, a new extension header, namely, a service information extension header, may be added in an IPv6 data packet header to carry the service information about a service data packet in the IPv6 data packet. FIG. 3 is a structural schematic diagram of a service information extension header according to an embodiment of the present invention.

As shown in FIG. 3, the service information extension header may include a Next Header field, a Header Extension Length field, and a Service Information field. The Next Header field may occupy, for example, one byte for recording a protocol value corresponding to the next extension header immediately following the service information extension header. The Header Extension Length field may occupy, for example, one byte for recording the length of the service information extension header. The length may, for example, be computed in 8-octet units. The Service Information field is of variable length and is used to record the service information about a service data packet. In the case that the service information extension header is added, the protocol value corresponding to the service information extension header may be recorded in the Next Header field of the header (such as a main header or other extension header) immediately preceding the service information extension header, so that the protocol value may be used to identify the service information extension header.

According to another embodiment of the present invention, a new option, namely, a service information option, may be added in a hop-by-hop options extension header of an IPv6 data packet header to carry the service information about a service data packet in the IPv6 data packet. In addition, according to another embodiment of the present invention, a service information option also may be added in a destination options extension header of an IPv6 data packet header to carry the service information about a service data packet in the IPv6 data packet, and the destination options extension header has been clearly described in RFC 2460. The destination options extension header has a structure which is similar to that of the hop-by-hop options extension header. In addition, according to embodiments of the present invention, the service information options added in these two extension headers may also have similar structures. FIG 4 is a structural schematic diagram of a service information option according to an embodiment of the present invention.

As shown in FIG. 4, the service information option may include a Service Information Option Type field, a Service Information Option Data Length field, and a Service Information Option Data field. The Service Information Option Type field may occupy, for example, one byte, as shown by the 1st to 8th bits in FIG. 4. The first and second bits of the Service Information Option Type field may be an Unrecognized Option Action indicator, and the third bit is an Option Change Allowed flag (the Unrecognized Option Action indicator and the Option Change Allowed flag are clearly described in RFC 2460). The last five bits of the Service Information Option Type field are Remainder of Option Type which may be used to record the protocol value corresponding to the service information option, so that the service information option may be identified by the protocol value. The Service Information Option Data Length field may occupy, for example, one byte for recording the length of the Service Information Option Data field immediately following the Service Information Option Data Length field. The length may, for example, be computed in 8-octet units. The Service Information Option Data field is of variable length and is used to record the service information about a service data packet.

Specific content of the service information about the service data packet recorded in the Service Information field shown in FIG. 3 and in the Service Information Option Data field shown in FIG. 4 may be determined according to different scenarios and requirements. The service information may include various information concerning service types, service attributes, or service providers and so on, and the information may be used by a network device or a network administrator to perform processing such as analysis, statistics collection, or classification about IPv6 data packets. For example, the service information may indicate that the IPv6 data packet involves a video service flow or a data service flow and so on, thereby facilitating classification management of network transmission. For example, in the application of network payment, the service information may be an ID of a bank payment service, so that the bank or a third party may collect statistics on and analyze payment transactions. For example, in the application of an IPTV service, the service information may be a program ID, thereby facilitating collect classification statistics on the broadcasting status of a program and the order distribution of different programs, and facilitating network management on such a basis. For example, the service information may also be an ID of a service provider, thereby facilitating network management and monitoring. Specific content of the service information may be correspondingly set according to requirements, and may include not only the examples described above and any combination thereof, but also any other information which may be used for performing processing such as analysis, statistics collection, or classification about IPv6 data packets.

FIG. 5A to FIG. 5C show several specific examples of the service information in an exemplary manner to describe the exemplary implementation modes of the Service Information field shown in FIG. 3 and the Service Information Option Data field shown in FIG. 4.

FIG. 5A is a schematic diagram of a service ID as the service information. The service ID may be an ID of a bank payment service or an IPTV program ID and so on, and the length thereof may be set according to actual requirements, for example, four bytes.

FIG. 5B is a schematic diagram of the combination of a service ID and a vendor ID as the service information. The service ID may be an ID of a bank payment service or an IPTV program ID and so on, and the vendor ID may be an ID of different service providers. Length of the service ID and the vendor ID may be set according to actual requirements, for example, 4 bytes.

FIG. 5C is a schematic diagram of a sub-option in type-length-value (TLV) format as the service information. According to embodiments of the present invention, a service information sub-option shown in FIG. 5C may be added in the Service Information field of the service information extension header or in the Service Information Option Data field of the service information option of the hop-by-hop options extension header or the destination options extension header. As shown in FIG. 5C, the service information sub-option may include a Sub-option Type field, a Sub-option Length field, and a Sub-option Value field. The Sub-option Type field may occupy, for example, one byte for recording the protocol value corresponding to the service information sub-option. The Sub-option Length field may occupy, for example, one byte for recording the length of the Sub-option Value field immediately following the Sub-option Length field. The length of the Sub-option Value field may, for example, be computed in 8-octet units. The length of the Sub-option Value field may vary, which is used to record the service information about a service data packet.

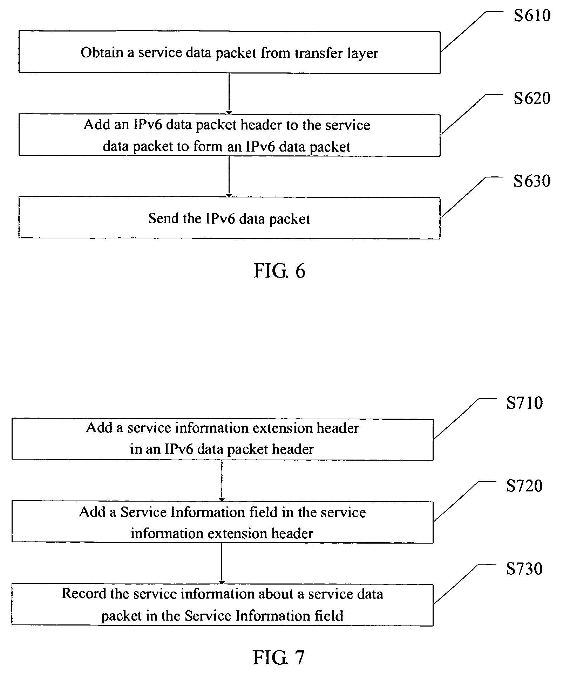

FIG. 6 is a flowchart of a method for sending IPv6 data packets according to an embodiment of the present invention. The method may be implemented for example at a transmitting end where an IPv6 data packet is to be transmitted. In S610, the transmitting end obtains a service data packet from transfer layer (for example, TCP layer). In S620, an IPv6 data packet header is added to the service data packet to form an IPv6 data packet, wherein the IPv6 data packet header added may carry the service information about the service data packet. In S630, the transmitting end sends the formed IPv6 data packet.

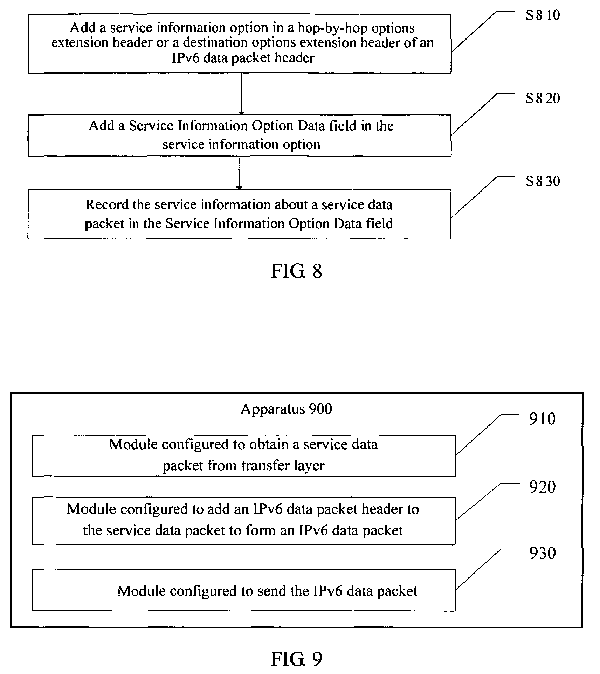

In the present invention, various methods may be implemented to carry the service information about a service data packet in an IPv6 data packet header. For example, FIG. 7 is a flowchart of a method for carrying the service information about a service data packet in a service information extension header of an IPv6 data packet header, and FIG. 8 is a flowchart of a method for carrying the service information about a service data packet in a service information option of a hop-by-hop options extension header or a destination options extension header of an IPv6 data packet header. As following the methods will be described in detail with reference to FIG 6 and FIG. 7.

As shown in FIG. 7, the method for carrying the service information about a service data packet in an IPv6 data packet header may include the following steps. In S710, a service information extension header is added in the IPv6 data packet header, wherein the service information extension header may have a structure, for example, as shown in FIG. 3. In such case, the protocol value corresponding to the service information extension header may be recorded in a Next Header field of the header (such as a main header or other extension header) immediately preceding the service information extension header to identify the service information extension header. In S720, a Service Information field may be added in the service information extension header. In S730, the service information about the service data packet may be recorded in the Service Information field. Alternatively, a Next Header field may be added in the service information extension header, and the Next Header field may be used to record the protocol value corresponding to the next extension header immediately following the service information extension header. Alternatively, a Header Extension Length field may be added in the service information extension header, and the Header Extension Length field may be used to record the length of the service information extension header.

According to embodiments of the present invention, the service information may be a sub-option in TLV format. In such case, the operation of recording the service information about the service data packet in the Service Information field in S730 may further comprise: adding a service information sub-option in the Service Information field, wherein the service information sub-option may have a structure, for example, as shown in FIG. 5C; adding a Sub-option Value field in the service information sub-option; and recording the service information about the service data packet in the Sub-option Value field. Alternatively, a Sub-option Type field may be added in the service information sub-option, and the Sub-option Type field may be used to record the protocol value corresponding to the service information sub-option. Alternatively, a Sub-option Length field may be added in the service information sub-option, and the Sub-option Length field may be used to record the length of the Sub-option Value field.

As shown in FIG. 8, the method for carrying the service information about a service data packet in an IPv6 data packet header may include the following steps. In S810, a service information option is added in a hop-by-hop options extension header or a destination options extension header of the IPv6 data packet header, wherein the service information option may have a structure, for example, as shown in FIG. 4. In S820, a Service Information Option Data field may be added in the service information option. In S830, the service information about the service data packet may be recorded in the Service Information Option Data field. Alternatively, a Service Information Option Type field may be added in the service information option, and the Service Information Option Type field may be used to record the protocol value corresponding to the service information option. Alternatively, a Service Information Option Data Length field may be added in the service information option, and the Service Information Option Data Length field may be used to record the length of the Service Information Option Data field.

According to embodiments of the present invention, the service information may be a sub-option in TLV format. In such case, the operation of recording the service information about the service data packet in the Service Information Option Data field in S830 may further comprise: adding a service information sub-option in the Service Information Option Data field, wherein the service information sub-option may have a structure, for example, as shown in FIG. 5C; adding a Sub-option Value field in the service information sub-option; and recording the service information about the service data packet in the Sub-option Value field. Alternatively, a Sub-option Type field may be added in the service information sub-option, wherein the Sub-option Type field may be used to record the protocol value corresponding to the service information sub-option. Alternatively, a Sub-option Length field may be added in the service information sub-option, wherein the Sub-option Length field may be used to record the length of the Sub-option Value field.

FIG. 9 is a schematic diagram of an apparatus 900 for sending IPv6 data packets according to an embodiment of the present invention. As shown in FIG. 9, the apparatus 900 may include a module 910 configured to obtain a service data packet from a transfer layer; a module 920 configured to add an IPv6 data packet header to the service data packet to form an IPv6 data packet, wherein the IPv6 data packet header carries the service information about the service data packet; and a module 930 configured to send the IPv6 data packet.

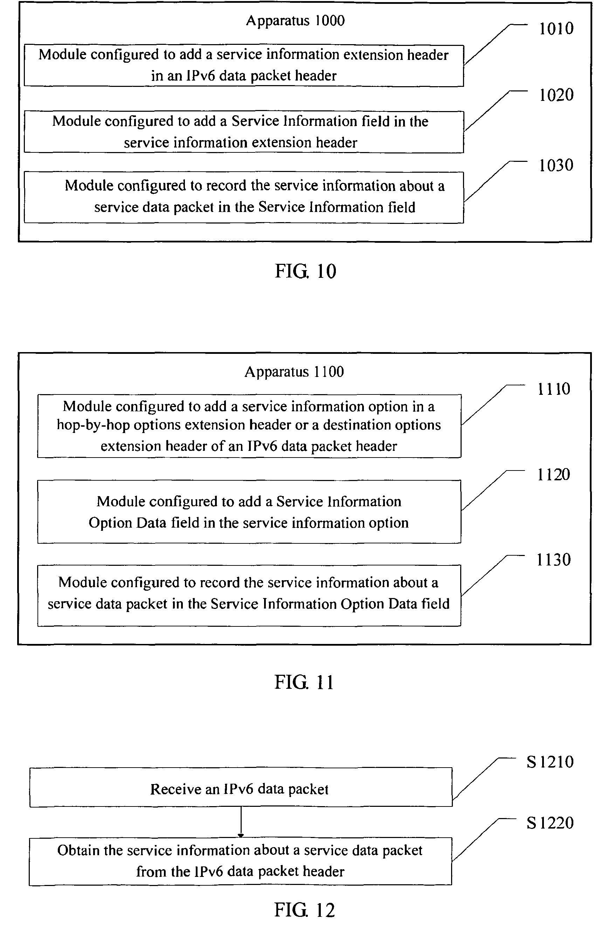

Based on different solutions to be implemented, the module 920 configured to add the IPv6 data packet header to the service data packet to form the IPv6 data packet may have different structures. For example, FIG. 10 shows that in the case that a service information extension header is used to carry the service information about the service data packet, the module 920 may further have a structure of an apparatus 1000. FIG. 11 shows that in the case that a service information option of a hop-by-hop options extension header or a destination options extension header is used to carry the service information about the service data packet, the module 920 may further have a structure of an apparatus 1100. The apparatuses will be described in detail with reference to FIG. 10 and FIG. 11 as following.

FIG. 10 is a schematic diagram of the apparatus 1000 for carrying the service information about a service data packet in a service information extension header according to an embodiment of the present invention. As shown in FIG. 10, the apparatus 1000 may include a module 1010 configured to add a service information extension header in an IPv6 data packet header; a module 1020 configured to add a Service Information field in the service information extension header; and a module 1030 configured to record the service information about the service data packet in the Service Information field. Alternatively, the apparatus 1000 may further include a module configured to record the protocol value corresponding to the service information extension header in the Next Header field of a header (such as a main header or other extension header) immediately preceding the service information extension header. Alternatively, the apparatus 1000 may further include a module configured to add a Next Header field in the service information extension header, and the Next Header field is used to record the protocol value corresponding to the next extension header immediately following the service information extension header; and a module configured to add a Header Extension Length field in the service information extension header, and the Header Extension Length field is used to record the length of the service information extension header.

According to embodiments of the present invention, alternatively, the module 1030 configured to record the service information about the service data packet in the Service Information field may further include: a module configured to add a service information sub-option in the Service Information field, wherein the service information sub-option may have a structure, for example, as shown in FIG 5C; a module configured to add a Sub-option Value field in the service information sub-option; and a module configured to record the service information about the service data packet in the Sub-option Value field. Alternatively, the module 1030 configured to record the service information about the service data packet in the Service Information field may further comprise: a module configured to add a Sub-option Type field in the service information sub-option, wherein the Sub-option Type field is used to record the protocol value corresponding to the service information sub-option; and a module configured to add a Sub-option Length field in the service information sub-option, wherein the Sub-option Length field is used to record the length of the Sub-option Value field.

FIG. 11 is a schematic diagram of the apparatus 1100 for carrying the service information about a service data packet in a service information option of a hop-by-hop options extension header or a destination options extension header. As shown in FIG. 11, the apparatus 1100 may comprise: a module 1110 configured to add a service information option in a hop-by-hop options extension header or a destination options extension header of an IPv6 data packet header, wherein the service information option may have a structure, for example, as shown in FIG. 4; a module 1120 configured to add a Service Information Option Data field in the service information option; and a module 1130 configured to record the service information about a service data packet in the Service Information Option Data field. Alternatively, the apparatus 1100 may further comprise a module configured to add a Service Information Option Type field in the service information option, wherein the Service Information Option Type field is used to record the protocol value corresponding to the service information option. Alternatively, the apparatus 1100 may further include a module configured to add a Service Information Option Data Length field in the service information option, wherein the Service Information Option Data Length field is used to record the length of the Service Information Option Data field.

According to embodiments of the present invention, alternatively, the module 1130 configured to record the service information about the service data packet in the Service Information Option Data field may further comprise: a module configured to add a service information sub-option in the Service Information Option Data field, wherein the service information sub-option may have a structure, for example, as shown in FIG. 5C; a module configured to add a Sub-option Value field in the service information sub-option; and a module configured to record the service information about the service data packet in the Sub-option Value field. Alternatively, the module 1130 configured to record the service information about the service data packet in the Service Information Option Data field may further comprise: a module configured to add a Sub-option Type field in the service information sub-option, wherein the Sub-option Type field is used to record the protocol value corresponding to the service information sub-option; and a module configured to add a Sub-option Length field in the service information sub-option, wherein the Sub-option Length field is used to record the length of the Sub-option Value field.

FIG. 12 is a flowchart of a method for receiving IPv6 data packets according to an embodiment of the present invention. The method may be implemented for example at a receiving end where an IPv6 data packet is to be received. In S1210, the receiving end receives an IPv6 data packet, wherein the IPv6 data packet is formed by adding an IPv6 data packet header to a service data packet, and the IPv6 data packet header carries service information about the service data packet. In S1220, the receiving end obtains the service information about the service data packet from the IPv6 data packet header.

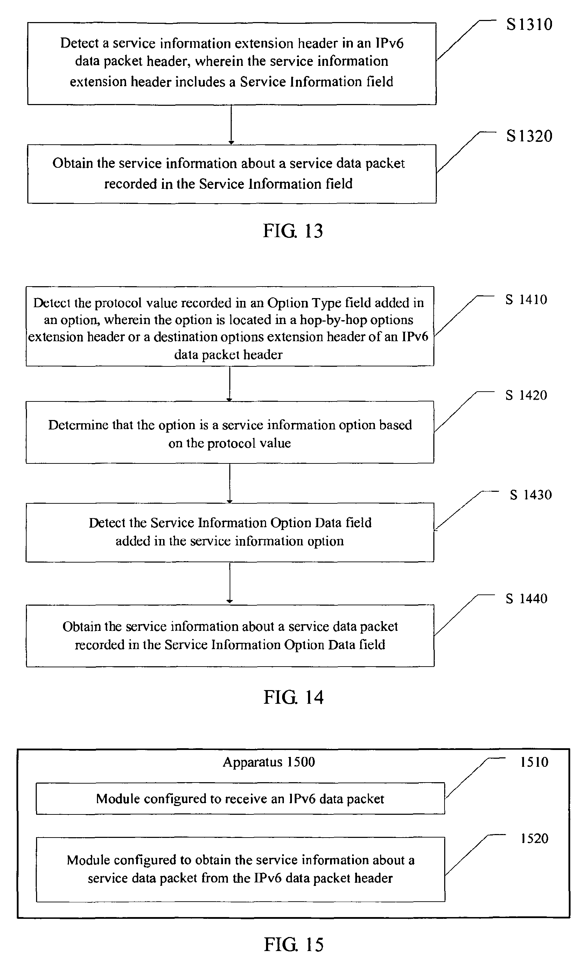

In the present invention, various methods may be implemented to obtain the service information about a service data packet from an IPv6 data packet header. For example, FIG. 13 is a flowchart of a method for obtaining the service information about a service data packet from a service information extension header of an IPv6 data packet header, and FIG. 14 is a flowchart of a method for obtaining the service information about a service data packet from a service information option of a hop-by-hop options extension header or a destination options extension header of an IPv6 data packet header. The following describes the methods in detail with reference to FIG 13 and FIG. 14.

As shown in FIG. 13, the method for obtaining the service information about a service data packet from an IPv6 data packet header may comprise the following steps. In S1310, a service information extension header in the IPv6 data packet header is detected, wherein the service information extension header may have a structure, for example, as shown in FIG. 3, and may include a Service Information field. Alternatively, the process of detecting the service information extension header may comprise: detecting the protocol value recorded in a Next Header field of a preceding header (such as a main header or other extension headers) immediately preceding the service information extension header; and determining that a next extension header immediately following the preceding header is the service information extension header based on the protocol value. In S1320, the service information about the service data packet recorded in the Service Information field is obtained. As shown in FIG. 3, alternatively, the service information extension header may further include a Next Header field and a Header Extension Length field.

According to embodiments of the present invention, the service information may be a sub-option in TLV format. In such case, the operation of obtaining the service information about the service data packet recorded in the Service Information field in S1320 may further comprise: detecting the service information sub-option added in the Service Information field, wherein the service information sub-option may have a structure, for example, as shown in FIG. 5C; detecting the Sub-option Value field added in the service information sub-option; and obtaining the service information about the service data packet recorded in the Sub-option Value field. As shown in FIG. 5C, alternatively, the service information sub-option may further include a Sub-option Type field and a Sub-option Length field.

As shown in FIG. 14, the method for obtaining the service information about a service data packet from an IPv6 data packet header may include in the following steps. In S1410, the protocol value recorded in an Option Type field added in an option is detected, wherein the option is located in a hop-by-hop options extension header or a destination options extension header of the IPv6 data packet header. In S1420, determining that the option is a service information option based on the protocol value, wherein the service information option may have a structure, for example, as shown in FIG. 4. In S1430, detecting the Service Information Option Data field added in the service information option. In S1440, obtaining the service information about the service data packet recorded in the Service Information Option Data field. As shown in FIG. 4, alternatively, the service information option may further include a Service Information Option Data Length field.

According to embodiments of the present invention, the service information may be a sub-option in TLV format. In such case, the operation of obtaining the service information about the service data packet recorded in the Service Information Option Data field in S1440 may further comprise: detecting the service information sub-option added in the Service Information Option Data field, wherein the service information sub-option may have a structure, for example, as shown in FIG. 5C; detecting the Sub-option Value field added in the service information sub-option; and obtaining the service information about the service data packet recorded in the Sub-option Value field. As shown in FIG. 5C, alternatively, the service information sub-option may further include a Sub-option Type field and a Sub-option Length field.

FIG. 15 is a schematic diagram of an apparatus 1500 for receiving IPv6 data packets according to an embodiment of the present invention. As shown in FIG. 15, the apparatus 1500 may comprise: a module 1510 configured to receive an IPv6 data packet, wherein the IPv6 data packet is formed by adding an IPv6 data packet header to a service data packet, and carrying the service information about the service data packet in the IPv6 data packet header; and a module 1520 configured to obtain the service information about the service data packet from the IPv6 data packet header.

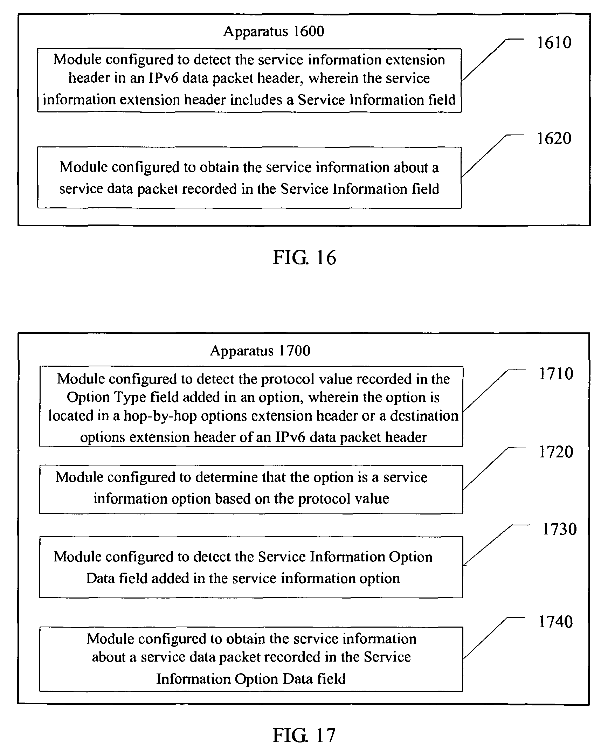

Based on different solutions to be implemented, the module 1520 configured to obtain the service information about the service data packet from the IPv6 data packet header may have different structures. For example, FIG. 16 shows that in the case that the IPv6 data packet header has a service information extension header, the module 1520 may further have a structure of an apparatus 1600. FIG. 17 shows that in the case that the IPv6 data packet has a service information option of a hop-by-hop options extension header or a destination options extension header, the module 1520 may further has a structure of an apparatus 1700. The following describes the apparatuses in detail with reference to FIG. 16 and FIG 17.

FIG. 16 is a schematic diagram of the apparatus 1600 for obtaining the service information about a service data packet from a service information extension header according to an embodiment of the present invention. As shown in FIG. 16, the apparatus 1600 may comprise: a module 1610 configured to detect the service information extension header in an IPv6 data packet header, wherein the service information extension header may has a structure, for example, as shown in FIG. 3 and include a Service Information field; and a module 1620 configured to obtain the service information about a service data packet recorded in the Service Information field. Alternatively, the module 1610 configured to detect the service information extension header may include: a module configured to detect the protocol value recorded in the Next Header field of the preceding header (such as a main header or other extension headers) immediately preceding the service information extension header; and a module configured to determine that the next extension header immediately following the preceding header is the service information extension header based on the protocol value. As shown in FIG. 3, alternatively, the service information extension header may further include a Next Header field and a Header Extension Length field.

According to embodiments of the present invention, alternatively, the module 1620 configured to obtain the service information about the service data packet recorded in the Service Information field may further include: a module configured to detect the service information sub-option added in the Service Information field, wherein the service information sub-option may have a structure, for example, as shown in FIG. 5C; a module configured to detect the Sub-option Value field added in the service information sub-option; and a module configured to obtain the service information about the service data packet recorded in the Sub-option Value field. As shown in FIG. 5C, alternatively, the service information sub-option may further include a Sub-option Type field and a Sub-option Length field.

FIG. 17 is a schematic diagram of the apparatus 1700 for obtaining the service information about a service data packet from a service information option of a hop-by-hop options extension header or a destination options extension header. As shown in FIG. 17, the apparatus 1700 may comprise: a module 1710 configured to detect the protocol value recorded in the Option Type field added in an option, wherein the option located in a hop-by-hop options extension header or a destination options extension header of an IPv6 data packet header; a module 1720 configured to determine that the option is a service information option based on the protocol value, wherein the service information option may have a structure, for example, as shown in FIG. 4; a module 1730 configured to detect the Service Information Option Data field added in the service information option; and a module 1740 configured to obtain the service information about the service data packet recorded in the Service Information Option Data field. As shown in FIG. 4, alternatively, the service information option may further include a Service Information Option Data Length field.

According to embodiments of the present invention, alternatively, the module 1740 configured to obtain the service information about the service data packet recorded in the Service Information Option Data field may further comprise: a module configured to detect the service information sub-option added in the Service Information Option Data field, wherein the service information sub-option may have a structure, for example, as shown in FIG. 5C; a module configured to detect the Sub-option Value field added in the service information sub-option; and a module configured to obtain the service information about the service data packet recorded in the Sub-option Value field. As shown in FIG. 5C, alternatively, the service information sub-option may further include a Sub-option Type field and a Sub-option Length field.

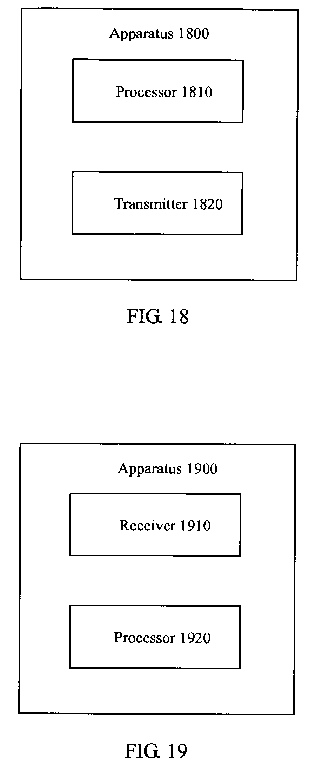

FIG. 18 is a schematic diagram of an apparatus 1800 for sending IPv6 data packets according to an embodiment of the present invention. As shown in FIG. 18, the apparatus 1800 may comprise a processor 1810 and a transmitter 1820. The processor 1810 may be configured to implement functions corresponding to the methods for carrying the service information about a service data packet in an IPv6 data packet described herein. For example, the processor 1810 may be configured to implement the exemplary methods shown in FIG. 6 to FIG. 8. The transmitter 1820 is connected to the processor 1810, and may be configured to send an IPv6 data packet carrying the service information about a service data packet.

FIG. 19 is a schematic diagram of the apparatus 1900 for receiving IPv6 data packets according to an embodiment of the present invention. As shown in FIG. 19, the apparatus 1900 may comprise a receiver 1910 and a processor 1920. The receiver 1910 may be configured to receive an IPv6 data packet. The processor 1920 is connected to the receiver 1910, and may be configured to implement functions corresponding to the methods for obtaining the service information about a service data packet from an IPv6 data packet described herein. For example, the processor 1920 may be configured to implement the exemplary methods shown in FIG 12 to FIG. 14.

All aspects described herein may be implemented with hardware, software, firmware, middleware, microcode, or any combination thereof. The software, firmware, middleware, microcode, program code, or code segment, when used to implement the apparatuses and/or methods, may be stored in a machine readable medium, for example, be stored in a storage part. For the implementation by using software, the technologies described herein may be implemented by using modules (such as programs and functions) implementing functions described herein. The software code may be stored in a memorizer unit and be executed by a processor. The memorizer unit may be implemented in the processor or may be located outside the processor. In the latter case, the memorizer may be connected to the processor by various methods.

The above description of disclosed embodiments is provided to enable the persons skilled in the art to implement or apply the present invention. Various modifications to these embodiments may be easily understood by the persons skilled in the art. Hence, the present invention is not intended to be limited to the embodiments described herein.

## Claims

1. A method for sending Internet Protocol version 6, IPv6,data packets, comprising:
obtaining (S610) a service data packet from a transfer layer;
adding (S620) an IPv6 data packet header to the service data packet to form an IPv6 data packet, wherein the IPv6 data packet header carries service information about the service data packet, and wherein the service information comprises an ID of a service provider; and
sending (S630) the IPv6 data packet.

2. The method according to claim 1, wherein carrying the service information about the service data packet in the IPv6 data packet header comprises:
adding (S710) a service information extension header in the IPv6 data packet header;
adding (S720) a Service Information field in the service information extension header; and
recording (S730) the service information about the service data packet in the Service Information field.

3. The method according to claim 2, wherein the recording the service information about the service data packet in the Service Information field comprises:
adding a service information sub-option in the Service Information field;
adding a Sub-option Value field in the service information sub-option; and
recording the service information about the service data packet in the Sub-option Value field.

4. The method according to claim 1, wherein carrying the service information about the service data packet in the IPv6 data packet header comprises:
adding (S810) a service information option in a hop-by-hop options extension header of the IPv6 data packet header;
adding (S820) a Service Information Option Data field in the service information option; and
recording (S830) the service information about the service data packet in the Service Information Option Data field.

5. The method according to claim 1, wherein carrying the service information about the service data packet in the IPv6 data packet header comprises:
adding (S810) a service information option in a destination options extension header of the IPv6 data packet header;
adding (S820) a Service Information Option Data field in the service information option; and
recording (S830) the service information about the service data packet in the Service Information Option Data field.

6. A method for receiving Internet Protocol version 6, IPv6, data packets, comprising:
receiving (S1210) an IPv6 data packet, wherein the IPv6 data packet is formed by adding an IPv6 data packet header to a service data packet, and the IPv6 data packet header carries service information about the service data packet, and wherein the service information comprises an ID of a service provider; and
obtaining (S1220) the service information about the service data packet from the IPv6 data packet header.

7. The method according to claim 6, wherein the obtaining the service information about the service data packet from the IPv6 data packet header comprises:
detecting (S1310) a service information extension header in the IPv6 data packet header, wherein the service information extension header comprises a Service Information field;
detecting a service information sub-option added in the Service Information field;
detecting a Sub-option Value field added in the service information sub-option; and
obtaining (S1320) the service information about the service data packet recorded in the Sub-option Value field.

8. The method according to claim 6, wherein the obtaining the service information about the service data packet from the IPv6 data packet header comprises:
detecting (S1410) a protocol value recorded in an Option Type field added in an option, wherein the option is located in a hop-by-hop options extension header of the IPv6 data packet header;
determining (S1420) that the option is a service information option based on the protocol value;
detecting (S1430) a Service Information Option Data field added in the service information option; and
obtaining (S1440) the service information about the service data packet recorded in the Service Information Option Data field.

9. The method according to claim 6, wherein the obtaining the service information about the service data packet from the IPv6 data packet header comprises:
detecting (S1410) a protocol value recorded in an Option Type field added in an option, wherein the option is located in a destination options extension header of the IPv6 data packet header;
determining (S1420) that the option is a service information option based on the protocol value;
detecting (S1430) a Service Information Option Data field added in the service information option; and
obtaining (S1440) the service information about the service data packet recorded in the Service Information Option Data field.

10. An apparatus for sending Internet Protocol version 6, IPv6,data packets, comprising:
a processor (1810) configured to obtain a service data packet from a transfer layer and add an IPv6 data packet header to the service data packet to form an IPv6 data packet, wherein the IPv6 data packet header carries service information about the service data packet, and wherein the service information comprises an ID of a service provider; and
a transmitter (1820) configured to send the IPv6 data packet.

11. The apparatus according to claim 10, wherein the processor (1810) is further configured to perform the following operations to carry the service information about the service data packet in the IPv6 data packet header:
adding a service information extension header in the IPv6 data packet header;
adding a Service Information field in the service information extension header; and
recording the service information about the service data packet in the Service Information field.

12. The apparatus according to claim 11, wherein the processor (1810) is further configured to perform the following operations to record the service information about the service data packet in the Service Information field:
adding a service information sub-option in the Service Information field;
adding a Sub-option Value field in the service information sub-option; and
recording the service information about the service data packet in the Sub-option Value field.

13. The apparatus according to claim 10, wherein the processor (1810) is further configured to perform the following operations to carry the service information about the service data packet in the IPv6 data packet header:
adding a service information option in a hop-by-hop options extension header of the IPv6 data packet header;
adding a Service Information Option Data field in the service information option; and
recording the service information about the service data packet in the Service Information Option Data field.

14. The apparatus according to claim 10, wherein the processor (1810) is further configured to perform the following operations to carry the service information about the service data packet in the IPv6 data packet header:
adding a service information option in a destination options extension header of the IPv6 data packet header;
adding a Service Information Option Data field in the service information option; and
recording the service information about the service data packet in the Service Information Option Data field.

15. An apparatus for receiving Internet Protocol version 6, IPv6,data packets, comprising:
a receiver (1910) configured to receive an IPv6 data packet, wherein the IPv6 data packet is formed by adding an IPv6 data packet header to a service data packet, and the IPv6 data packet header carries service information about the service data packet, and wherein the service information comprises an ID of a service provider; and
a processor (1920) configured to obtain the service information about the service data packet from the IPv6 data packet header.

16. The apparatus according to claim 15, wherein the processor (1920) is further configured to perform the following operations to obtain the service information about the service data packet from the IPv6 data packet header:
detecting a service information extension header in the IPv6 data packet header, wherein the service information extension header comprises a Service Information field;
detecting a service information sub-option added in the Service Information field;
detecting a Sub-option Value field added in the service information sub-option; and
obtaining the service information about the service data packet recorded in the Sub-option Value field.

17. The apparatus according to claim 15, wherein the processor (1920) is further configured to perform the following operations to obtain the service information about the service data packet from the IPv6 data packet header:
detecting a protocol value recorded in an Option Type field added in an option, wherein the option is located in a hop-by-hop options extension header of the IPv6 data packet header;
determining that the option is a service information option based on the protocol value;
detecting a Service Information Option Data field added in the service information option; and
obtaining the service information about the service data packet recorded in the Service Information Option Data field.

18. The apparatus according to claim 15, wherein the processor (1920) is further configured to perform the following operations to obtain the service information about the service data packet from the IPv6 data packet header:
detecting a protocol value recorded in an Option Type field added in an option, wherein the option is located in a destination options extension header of the IPv6 data packet header;
determining that the option is a service information option based on the protocol value;
detecting a Service Information Option Data field added in the service information option; and
obtaining the service information about the service data packet recorded in the Service Information Option Data field.

## Patentansprüche

1. Verfahren zum Senden von Internet Protokoll Version 6 (IPv6)-Datenpaketen, umfassend:
Erhalten (S610) eines Servicedatenpakets von einer Transferschicht;
Hinzufügen (S620) eines IPv6-Datenpaket-Headers zu dem Servicedatenpaket, um ein IPv6-Datenpaket zu bilden, wobei der IPv6-Datenpaket-Header Serviceinformationen über das Servicedatenpaket trägt, und wobei die Serviceinformationen eine ID eines Service-Providers umfassen; und
Senden (S630) des IPv6-Datenpakets.

2. Verfahren nach Anspruch 1, wobei das Tragen der Serviceinformationen über das Servicedatenpaket in dem IPv6-Datenpaket-Header umfasst:
Hinzufügen (S710) eines Serviceinformationserweiterungs-Headers in dem IPv6-Datenpaket-Header;
Hinzufügen (S720) eines "Service Information"-Felds in dem Serviceinformationserweiterungs-Header; und
Aufzeichnen (S730) der Serviceinformationen über das Servicedatenpaket in dem "Service Information"-Feld.

3. Verfahren nach Anspruch 2, wobei das Aufzeichnen der Serviceinformationen über das Servicedatenpaket in dem "Service Information"-Feld umfasst:
Hinzufügen einer Serviceinformationsunteroption in dem "Service Information"-Feld;
Hinzufügen eines "Sub-option Value"-Felds in der Serviceinformationsunteroption; und
Aufzeichnen der Serviceinformationen über das Servicedatenpaket in dem "Sub-option Value"-Feld.

4. Verfahren nach Anspruch 1, wobei das Tragen der Serviceinformationen über das Servicedatenpaket in dem IPv6-Datenpaket-Header umfasst:
Hinzufügen (S810) einer Serviceinformationsoption in einem "Hop-by-Hop"-Optionenerweiterungs-Header des IPv6-Datenpaket-Headers;
Hinzufügen (S820) eines "Service Information Option Data"-Felds in der Serviceinformationsoption; und
Aufzeichnen (S830) der Serviceinformationen über das Servicedatenpaket in dem "Service Information Option Data"-Feld.

5. Verfahren nach Anspruch 1, wobei das Tragen der Serviceinformationen über das Servicedatenpaket in dem IPv6-Datenpaket-Header umfasst:
Hinzufügen (S810) einer Serviceinformationsoption in einem Zieloptionenerweiterungs-Header des IPv6-Datenpaket-Headers;
Hinzufügen (S820) eines "Service Information Option Data"-Felds in der Serviceinformationsoption; und
Aufzeichnen (S830) der Serviceinformationen über das Servicedatenpaket in dem "Service Information Option Data"-Feld.

6. Verfahren zum Empfangen von Internet Protokoll Version 6 (IPv6)-Datenpaketen, umfassend:
Empfangen (S1210) eines IPv6-Datenpakets, wobei das IPv6-Datenpaket durch Hinzufügen eines IPv6-Datenpaket-Headers zu einem Servicedatenpaket gebildet wird, und wobei der IPv6-Datenpaket-Header Serviceinformationen über das Servicedatenpaket trägt, und wobei die Serviceinformationen eine ID eines Service-Providers umfassen;
Erhalten (S1220) der Serviceinformationen über das Servicedatenpaket aus dem IPv6-Datenpaket-Header.

7. Verfahren nach Anspruch 6, wobei das Erhalten der Serviceinformationen über das Servicedatenpaket aus dem IPv6-Datenpaket-Header umfasst:
Erkennen (S1310) eines Serviceinformationserweiterungs-Headers in dem IPv6-Datenpaket-Header, wobei der Serviceinformationserweiterungs-Header ein "Service Information"-Feld umfasst.
Erkennen einer Serviceinformationsunteroption, die in dem "Service Information"-Feld zugefügt wurde;
Erkennen eines "Sub-option Value"-Felds, das in der Serviceinformationsunteroption hinzugefügt wurde; und
Erhalten (S1320) der Serviceinformationen über das Servicedatenpaket, die in dem "Sub-option Value"-Feld aufgezeichnet wurden.

8. Verfahren nach Anspruch 6, wobei das Erhalten der Serviceinformationen über das Servicedatenpaket aus dem IPv6-Datenpaket-Header umfasst:
Erkennen (S1410) eines Protokollwerts, der in einem "Option Type"-Feld aufgezeichnet wurde, das in einer Option zugefügt wird, wobei die Option sich in einem "Hop-by-Hop"-Optionenerweiterungs-Header des IPv6-Datenpaket-Headers befindet;
Bestimmen (S1420), dass die Option eine Serviceinformationsoption ist, basierend auf dem Protokollwert;
Erkennen (S1430) eines "Service Information Option Data"-Felds, das in der Serviceinformationsoption hinzugefügt wurde; und
Erhalten (S1440) der Serviceinformationen über das Servicedatenpaket, die in dem "Service Information Option Data"-Feld aufgezeichnet wurden.

9. Verfahren nach Anspruch 6, wobei das Erhalten der Serviceinformationen über das Servicedatenpaket aus dem IPv6-Datenpaket-Header umfasst:
Erkennen (S1410) eines Protokollwerts, der in einem "Option Type"-Feld aufgezeichnet wurde, das in einer Option zugefügt wurde, wobei die Option sich in einem Zieloptionenerweiterungs-Header des IPv6-Datenpaket-Headers befindet;
Bestimmen (S1420), dass die Option eine Serviceinformationsoption ist, basierend auf dem Protokollwert;
Erkennen (S1430) eines "Service Information Option Data"-Felds, das in der Serviceinformationsoption hinzugefügt wurde; und
Erhalten (S1440) der Serviceinformationen über das Servicedatenpaket, die in dem "Service Information Option Data"-Feld aufgezeichnet wurden.

10. Vorrichtung zum Senden von Internet Protokoll Version 6 (IPv6)-Datenpaketen, umfassend:
einen Prozessor (1810), der zum Erhalten eines Servicedatenpakets von einer Transferschicht und zum Hinzufügen eines IPv6-Datenpaket-Headers zu dem Servicedatenpaket konfiguriert ist, um ein IPv6-Datenpaket zu bilden, wobei der IPv6-Datenpaket-Header Serviceinformationen über das Servicedatenpaket trägt, und wobei die Serviceinformationen eine ID eines Service-Providers umfassen; und
einen Sender (1820), der zum Senden des IPv6-Datenpakets konfiguriert ist.

11. Vorrichtung nach Anspruch 10, wobei der Prozessor (1810) ferner zum Durchführen der folgenden Vorgänge konfiguriert ist, um die Serviceinformationen über das Servicedatenpaket in dem IPv6-Datenpaket-Header zu tragen:
Hinzufügen eines Serviceinformationserweiterungs-Headers zu dem IPv6-Datenpaket-Header;
Hinzufügen eines "Service Information"-Felds zu dem Serviceinformationserweiterungs-Header; und
Aufzeichnen der Serviceinformationen über das Servicedatenpaket in dem "Service Information"-Feld.

12. Vorrichtung nach Anspruch 11, wobei der Prozessor (1810) ferner zum Durchführen der folgenden Vorgänge konfiguriert ist, um die Serviceinformationen über das Servicedatenpaket in dem "Service Information"-Feld aufzuzeichnen:
Hinzufügen einer Serviceinformationsunteroption in dem "Service Information"-Feld;
Hinzufügen eines "Sub-option Value"-Felds in der Serviceinformationsunteroption; und
Aufzeichnen der Serviceinformationen über das Servicedatenpaket in dem "Sub-option Value"-Feld.

13. Vorrichtung nach Anspruch 10, wobei der Prozessor (1810) ferner zum Durchführen der folgenden Vorgänge konfiguriert ist, um die Serviceinformationen über das Servicedatenpaket in dem IPv6-Datenpaket-Header zu tragen:
Hinzufügen einer Serviceinformationsoption in einem "Hop-by-Hop"-Optionenerweiterungs-Header des IPv6-Datenpaket-Headers;
Hinzufügen eines "Service Information Option Data"-Felds in der Serviceinformationsoption; und
Aufzeichnen der Serviceinformationen über das Servicedatenpaket in dem "Service Information Option Data"-Feld.

14. Vorrichtung nach Anspruch 10, wobei der Prozessor (1810) ferner zum Durchführen der folgenden Vorgänge konfiguriert ist, um die Serviceinformationen über das Servicedatenpaket in dem IPv6-Datenpaket-Header zu tragen:
Hinzufügen einer Serviceinformationsoption zu einem Zieloptionenerweiterungs-Header des IPv6-Datenpaket-Headers;
Hinzufügen eines "Service Information Option Data"-Felds in der Serviceinformationsoption; und
Aufzeichnen der Serviceinformationen über das Servicedatenpaket in dem "Service Information Option Data"-Feld.

15. Vorrichtung zum Empfangen von Internet Protokoll Version 6 (IPv6)-Datenpaketen, umfassend:
einen Empfänger (1910), der zum Empfangen eines IPv6-Datenpakets konfiguriert ist, wobei das IPv6-Datenpaket durch Hinzufügen eines IPv6-Datenpaket-Headers zu einem Servicedatenpaket gebildet wird, und wobei der IPv6-Datenpaket-Header Serviceinformationen über das Servicedatenpaket trägt, und wobei die Serviceinformationen eine ID eines Service-Providers umfassen; und
einen Prozessor (1920), der zum Erhalten der Serviceinformationen über das Servicedatenpaket aus dem IPv6-Datenpaket-Header konfiguriert ist.

16. Vorrichtung nach Anspruch 15, wobei der Prozessor (1920) ferner zum Durchführen der folgenden Vorgänge konfiguriert ist, um die Serviceinformationen über das Servicedatenpaket aus dem IPv6-Datenpaket-Header zu erhalten:
Erkennen eines Serviceinformationserweiterungs-Headers in dem IPv6-Datenpaket-Header, wobei der Serviceinformationserweiterungs-Header ein "Service Information"-Feld umfasst;
Erkennen einer Serviceinformationsunteroption, die in dem "Service Information"-Feld zugefügt wurde;
Erkennen eines "Sub-option Value"-Felds, das in der Serviceinformationsunteroption hinzugefügt wurde; und
Erhalten der Serviceinformationen über das Servicedatenpaket, die in dem "Sub-option Value"-Feld aufgezeichnet wurden.

17. Vorrichtung nach Anspruch 15, wobei der Prozessor (1920) ferner zum Durchführen der folgenden Vorgänge konfiguriert ist, um die Serviceinformationen über das Servicedatenpaket aus dem IPv6-Datenpaket-Header zu erhalten:
Erkennen eines Protokollwerts, der in einem "Option Type"-Feld aufgezeichnet wurde, das in einer Option zugefügt wurde, wobei die Option sich in einem "Hop-by-Hop"-Optionenerweiterungs-Header des IPv6-Datenpaket-Headers befindet;
Bestimmen, dass die Option eine Serviceinformationsoption ist, basierend auf dem Protokollwert;
Erkennen eines "Service Information Option Data"-Felds, das in der Serviceinformationsoption hinzugefügt wurde; und
Erhalten der Serviceinformationen über das Servicedatenpaket, die in dem "Service Information Option Data"-Feld aufgezeichnet wurden.

18. Vorrichtung nach Anspruch 15, wobei der Prozessor (1920) ferner zum Durchführen der folgenden Vorgänge konfiguriert ist, um die Serviceinformationen über das Servicedatenpaket aus dem IPv6-Datenpaket-Header zu erhalten:
Erkennen eines Protokollwerts, der in einem "Option Type"-Feld aufgezeichnet wurde, das in einer Option zugefügt wurde, wobei die Option sich in einem Zieloptionenerweiterungs-Header des IPv6-Datenpaket-Headers befindet;
Bestimmen, dass die Option eine Serviceinformationsoption ist, basierend auf dem Protokollwert;
Erkennen eines "Service Information Option Data"-Felds, das in der Serviceinformationsoption hinzugefügt wurde; und
Erhalten der Serviceinformationen über das Servicedatenpaket, die in dem "Service Information Option Data"-Feld aufgezeichnet wurden.

## Revendications

1. Procédé pour l'envoi de paquets de données de Protocole Internet version 6, IPv6, comprenant :
l'obtention (S610) d'un paquet de données de service à partir d'une couche de transfert ;
l'ajout (S620) d'un entête de paquet de données IPv6 au paquet de données de service pour former un paquet de données IPv6, dans lequel l'entête de paquet de données IPv6 transporte des informations de service concernant le paquet de données de service, et dans lequel les informations de service comprennent un ID d'un fournisseur de service ; et
l'envoi (S630) du paquet de données IPv6.

2. Procédé selon la revendication 1, dans lequel le transport des informations de service concernant le paquet de données de service dans l'entête de paquet de données IPv6 comprend :
l'ajout (S710) d'un entête d'extension d'informations de service dans l'entête de paquet de données IPv6 ;
l'ajout (S720) d'un champ d'Informations de Service dans l'entête d'extension d'informations de service ; et
l'enregistrement (S730) des informations de service concernant le paquet de données de service dans le champ d'Informations de Service.

3. Procédé selon la revendication 2, dans lequel l'enregistrement des informations de service concernant le paquet de données de service dans le champ d'Informations de Service comprend :
l'ajout d'une sous-option d'informations de service dans le champ d'Informations de Service ;
l'ajout d'un champ de Valeur de Sous-option dans la sous-option d'informations de service ; et
l'enregistrement des informations de service concernant le paquet de données de service dans le champ de Valeur de Sous-option.

4. Procédé selon la revendication 1, dans lequel le transport des informations de service concernant le paquet de données de service dans l'entête de paquet de données IPv6 comprend :
l'ajout (S810) d'une option d'informations de service dans un entête d'extension d'options de bond à bond de l'entête de paquet de données IPv6 ;
l'ajout (S820) d'un champ de Données d'Options d'Informations de Service dans l'option d'informations de service ; et
l'enregistrement (S830) des informations de service concernant le paquet de données de service dans le champ de Données d'Options d'Informations de Service.

5. Procédé selon la revendication 1, dans lequel le transport des informations de service concernant le paquet de données de service dans l'entête de paquet de données IPv6 comprend :
l'ajout (S810) d'une option d'informations de service dans un entête d'extension d'options de destination de l'entête de paquet de données IPv6 ;
l'ajout (S820) d'un champ de Données d'Options d'Informations de Service dans l'option d'informations de service ; et
l'enregistrement (S830) des informations de service concernant le paquet de données de service dans le champ de Données d'Options d'Informations de Service.

6. Procédé pour la réception de paquets de données de Protocole Internet version 6, IPv6, comprenant :
la réception (S1210) d'un paquet de données IPv6, dans lequel le paquet de données IPv6 est formé par ajout d'un entête de paquet de données IPv6 à un paquet de données de service, et l'entête de paquet de données IPv6 transporte des informations de service concernant le paquet de données de service, et dans lequel les informations de service comprennent un ID d'un fournisseur de service ; et
l'obtention (S 1220) des informations de service concernant le paquet de données de service à partir de l'entête de paquet de données IPv6.

7. Procédé selon la revendication 6, dans lequel l'obtention des informations de service concernant le paquet de données de service à partir de l'entête de paquet de données IPv6 comprend :
la détection (S 1310) d'un entête d'extension d'informations de service dans l'entête de paquet de données IPv6, dans lequel l'entête d'extension d'informations de service comprend un champ d'Informations de Service ;
la détection d'une sous-option d'informations de service ajoutée dans le champ d'Informations de Service ;
la détection d'un champ de Valeur de Sous-option ajouté dans la sous-option d'informations de service ; et
l'obtention (S1320) des informations de service concernant le paquet de données de service enregistrées dans le champ de Valeur de Sous-option.

8. Procédé selon la revendication 6, dans lequel l'obtention des informations de service concernant le paquet de données de service à partir de l'entête de paquet de données IPv6 comprend :
la détection (S1410) d'une valeur de protocole enregistrée dans un champ de Type d'Option ajouté dans une option, dans lequel l'option est située dans un entête d'extension d'options de bond à bond de l'entête de paquet de données IPv6 ;
la détermination (S 1420) du fait que l'option est une option d'informations de service basée sur la valeur de protocole ;
la détection (S1430) d'un champ de Données d'Options d'Informations de Service ajouté dans l'option d'informations de service ; et
l'obtention (S 1440) des informations de service concernant le paquet de données de service enregistrées dans le champ de Données d'Options d'Informations de Service.

9. Procédé selon la revendication 6, dans lequel l'obtention des informations de service concernant le paquet de données de service à partir de l'entête de paquet de données IPv6 comprend :
la détection (S 1410) d'une valeur de protocole enregistrée dans un champ de Type d'Option ajouté dans une option, dans lequel l'option est située dans un entête d'extension d'options de destination de l'entête de paquet de données IPv6 ;
la détermination (S 1420) du fait que l'option est une option d'informations de service basée sur la valeur de protocole ;
la détection (S1430) d'un champ de Données d'Options d'Informations de Service ajouté dans l'option d'informations de service ; et
l'obtention (S1440) des informations de service concernant le paquet de données de service enregistrées dans le champ de Données d'Options d'Informations de Service.

10. Appareil pour l'envoi de paquets de données de Protocole Internet version 6, IPv6, comprenant :
un processeur (1810) configuré pour obtenir un paquet de données de service à partir d'une couche de transfert et ajouter un entête de paquet de données IPv6 au paquet de données de service pour former un paquet de données IPv6, dans lequel l'entête de paquet de données IPv6 transporte des informations de service concernant le paquet de données de service, et dans lequel les informations de service comprennent un ID d'un fournisseur de service ; et
un émetteur (1820) configuré pour envoyer le paquet de données IPv6.

11. Appareil selon la revendication 10, dans lequel le processeur (1810) est en outre configuré pour effectuer les opérations suivantes afin de transporter les informations de service concernant le paquet de données de service dans l'entête de paquet de données IPv6 :
l'ajout d'un entête d'extension d'informations de service dans l'entête de paquet de données IPv6 ;
l'ajout d'un champ d'Informations de Service dans l'entête d'extension d'informations de service ; et
l'enregistrement des informations de service concernant le paquet de données de service dans le champ d'Informations de Service.

12. Appareil selon la revendication 11, dans lequel le processeur (1810) est en outre configuré pour effectuer les opérations suivantes afin d'enregistrer les informations de service concernant le paquet de données de service dans le champ d'Informations de Service :
l'ajout d'une sous-option d'informations de service dans le champ d'Informations de Service ;
l'ajout d'un champ de Valeur de Sous-option dans la sous-option d'informations de service ; et
l'enregistrement des informations de service concernant le paquet de données de service dans le champ de Valeur de Sous-option.

13. Appareil selon la revendication 10, dans lequel le processeur (1810) est en outre configuré pour effectuer les opérations suivantes afin de transporter les informations de service concernant le paquet de données de service dans l'entête de paquet de données IPv6 :
l'ajout d'une option d'informations de service dans un entête d'extension d'options de bond à bond de l'entête de paquet de données IPv6 ;
l'ajout d'un champ de Données d'Options d'Informations de Service dans l'option d'informations de service ; et
l'enregistrement des informations de service concernant le paquet de données de service dans le champ de Données d'Options d'Informations de Service.

14. Appareil selon la revendication 10, dans lequel le processeur (1810) est en outre configuré pour effectuer les opérations suivantes afin de transporter les informations de service concernant le paquet de données de service dans l'entête de paquet de données IPv6 :
l'ajout d'une option d'informations de service dans un entête d'extension d'options de destination de l'entête de paquet de données IPv6 ;
l'ajout d'un champ de Données d'Options d'Informations de Service dans l'option d'informations de service ; et
l'enregistrement des informations de service concernant le paquet de données de service dans le champ de Données d'Options d'Informations de Service.

15. Appareil pour la réception de paquets de données de Protocole Internet version 6, IPv6, comprenant :
un récepteur (1910) configuré pour recevoir un paquet de données IPv6, dans lequel le paquet de données IPv6 est formé par ajout d'un entête de paquet de données IPv6 à un paquet de données de service, et l'entête de paquet de données IPv6 transporte des informations de service concernant le paquet de données de service, et dans lequel les informations de service comprennent un ID d'un fournisseur de service ; et
un processeur (1920) configuré pour obtenir les informations de service concernant le paquet de données de service à partir de l'entête de paquet de données IPv6.

16. Appareil selon la revendication 15, dans lequel le processeur (1920) est en outre configuré pour effectuer les opérations suivantes afin d'obtenir les informations de service concernant le paquet de données de service à partir de l'entête de paquet de données IPv6 :
la détection d'un entête d'extension d'informations de service dans l'entête de paquet de données IPv6, dans lequel l'entête d'extension d'informations de service comprend un champ d'Informations de Service ;
la détection d'une sous-option d'informations de service ajoutée dans le champ d'Informations de Service ;
la détection d'un champ de Valeur de Sous-option ajouté dans la sous-option d'informations de service ; et
l'obtention des informations de service concernant le paquet de données de service enregistrées dans le champ de Valeur de Sous-option.

17. Appareil selon la revendication 15, dans lequel le processeur (1920) est en outre configuré pour effectuer les opérations suivantes afin d'obtenir les informations de service concernant le paquet de données de service à partir de l'entête de paquet de données IPv6 :
la détection d'une valeur de protocole enregistrée dans un champ de Type d'Option ajouté dans une option, dans lequel l'option est située dans un entête d'extension d'options de bond à bond de l'entête de paquet de données IPv6 ;
la détermination du fait que l'option est une option d'informations de service basée sur la valeur de protocole ;
la détection d'un champ de Données d'Options d'Informations de Service ajouté dans l'option d'informations de service ; et
l'obtention des informations de service concernant le paquet de données de service enregistrées dans le champ de Données d'Options d'Informations de Service.

18. Appareil selon la revendication 15, dans lequel le processeur (1920) est en outre configuré pour effectuer les opérations suivantes afin d'obtenir les informations de service concernant le paquet de données de service à partir de l'entête de paquet de données IPv6 :
la détection d'une valeur de protocole enregistrée dans un champ de Type d'Option ajouté dans une option, dans lequel l'option est située dans un entête d'extension d'options de destination de l'entête de paquet de données IPv6 ;
la détermination du fait que l'option est une option d'informations de service basée sur la valeur de protocole ;
la détection d'un champ de Données d'Options d'Informations de Service ajouté dans l'option d'informations de service ; et
l'obtention des informations de service concernant le paquet de données de service enregistrées dans le champ de Données d'Options d'Informations de Service.
